# EUROPÄISCHE PATENTSCHRIFT

(11) **EP 3 051 928 B1**
(45) Veröffentlichungstag und Bekanntmachung des Hinweises auf die Patenterteilung: **16.01.2019**
(21) Anmeldenummer: 15153044.1
(22) Anmeldetag: 29.01.2015
(51) Int. Cl.: H05H 1/34, B23K 10/02, H05H 1/48

(54) **Plasmabrenner**
Plasma torch
Torche à plasma

(43) Veröffentlichungstag der Anmeldung: 03.08.2016
(73) Patentinhaber: Kjellberg-Stiftung, 03238 Finsterwalde (DE)
(72) Erfinder: Laurisch, Frank, 03238 Finsterwalde (DE); Grundke, Timo, 03238 Finsterwalde (DE); Nogowski, Réne, 01187 Dresden (DE); Krink, Volker, 03238 Finsterwalde (DE)
(74) Vertreter: Pfenning, Meinig & Partner mbB

(56) Entgegenhaltungen:
- EP-A2- 0 146 278
- WO-A1-91/16166
- US-A- 4 692 584
- US-A- 4 775 774

## Beschreibung

Die Erfindung betrifft einen Plasmabrenner, insbesondere einen Plasmaschneidbrenner.

Als Plasma wird ein thermisch hoch aufgeheiztes elektrisch leitfähiges Gas bezeichnet, das aus positiven und negativen Ionen, Elektronen sowie angeregten und neutralen Atomen und Molekülen besteht. Als Plasmagas werden unterschiedliche Gase, zum Beispiel das einatomige Argon und/oder die zweiatomigen Gase Wasserstoff, Stickstoff, Sauerstoff oder Luft eingesetzt. Diese Gase ionisieren und dissoziieren durch die Energie eines Lichtbogens. Der durch eine Düse eingeschnürte Lichtbogen wird dann als Plasmastrahl bezeichnet. Der Plasmastrahl kann in seinen Parametern durch die Gestaltung der Düse und Elektrode stark beeinflusst werden. Diese Parameter des Plasmastrahls sind zum Beispiel der Strahldurchmesser, die Temperatur, Energiedichte und die Strömungsgeschwindigkeit des Gases.

Beim Plasmaschneiden wird das Plasma in der Regel mittels einer Düse, die gas- oder wassergekühlt sein kann, eingeschnürt. Dadurch können Energiedichten bis 2x106 W/cm² erreicht werden. Im Plasmastrahl entstehen Temperaturen bis 30.000 °C, die in Verbindung mit der hohen Strömungsgeschwindigkeit des Gases sehr hohe Schneidgeschwindigkeiten an Werkstoffen realisieren.

Plasmabrenner bestehen üblicherweise aus einem Plasmabrennerkopf und einem Plasmabrennerschaft. Im Plasmabrennerkopf sind eine Elektrode und eine Düse befestigt. Zwischen ihnen strömt das Plasmagas, das durch die Düsenbohrung austritt. Meistens wird das Plasmagas durch eine Gasführung, die zwischen der Elektrode und der Düse angebracht ist, geführt und kann in Rotation gebracht werden.

Bekannt sind auch Anordnungen, bei denen Ventile, bevorzugt elektromagnetisch betriebene Ventile, das Plasmagas umschalten oder regeln. Diese befinden sich außerhalb des Brennerschaftes/-gehäuses in einer Baugruppe. Diese Ventile können beispielsweise in einer Baugruppe am Schlauchpaket befestigt sein. Ebenso ist es bekannt, dass diese Ventile an einer Koppeleinheit zwischen den Gasschläuchen des Plasmabrenners und den Versorgungsschläuchen zur Gasversorgung angebracht sind.

Ebenso bekannt ist es, dass mehrere Ventile für das Plasmagas eingesetzt werden. Dies sind z.B. ein Gas zum Zünden und ein Gas zum Schneiden. Als Plasmagas wird für das Plasmaschneiden Sauerstoff verwendet. Mit Luft oder Stickstoff kann das Plasma gezündet und mit Sauerstoff geschnitten werden. Es besteht auch die Möglichkeit, Gase zu mischen, was beispielsweise von Argon und Wasserstoff beim Schneiden legierter Stähle angewandt wird. Es ist auch bekannt, dass für einen möglichst schnellen Wechsel zwischen unterschiedlichen Plasmagasen die jeweilige Schlauchleitung entlüftet werden sollte.

Nachteilig bei den bekannten Lösungen ist es, dass ein schnelles Umschalten zwischen den Gasen und ein schnelles Entlüften des Plasmagasraumes im Innereren eines Plasmakopfes/Gehäuses, dessen Volumen sich durch den Leitungen oder Bohrungen oder auf sonstige Art zwischen der Düsenbohrung und den Ventilen gebildet wird, nicht in ausreichend kurzer Zeit möglich ist. Insbesondere bei kleinen Durchmessern der Düsenbohrung kann es mehrere 100 ms, teilweise sogar bis zu 1 sec. dauern, bis der Druck in diesem Raum auf unter 0,5 bar reduziert ist. Bei Abschaltprozessen ist es am Schnittende oft gewünscht, den Plasmabogen bei möglichst geringen Drücken des Plasmagases PG1 bzw. der Plasmagase PG1 und PG2 abzuschalten, um den Verschleiß der Elektrode zu minimieren. Ein weiterer Nachteil ist auch, dass die Längen der Leitungen die Zeit, bis der gewünschte erniedrigte Druck erreicht worden ist, beeinflussen. Lange Leitungslängen verlängern die Zeit, sind aber wegen der unterschiedlichen Arten von Führungssystemen, wie beispielsweise Roboter oder CNC-gesteuerte xy-Führungsmaschinen mit und ohne Schwenkaggregat zum Fasenschneiden oftmals notwendig.

Die Anbringung von Ventilen am Plasmabrennerschaft ist für das Befestigen im Führungssystem ungünstig, insbesondere bei Schwenkaggregaten ist dies störend.

In EP 0 146 278 A2 ist eine Vorrichtung zum Plasmaspritzen beschrieben, bei der gebildetes Plasma aus einer Düse austreten soll. Die eingesetzten Gase sollen oxidiert werden.

Aus US 4,692,584 und US 4,775,774 sind Plasmabrenner bekannt, bei denen Plasmagas durch einen Hohlraum zu einer Düse und die Elektroden geführt wird.

Es ist daher Aufgabe der Erfindung, Möglichkeiten für verbesserte Bedingungen beim Abschalten, Umschalten oder Veränderungen bei einem gesteuerten oder geregelten Betrieb eines Plasmabrenners bei der Zufuhr von Plasmagas anzugeben.

Erfindungsgemäß wird diese Aufgabe mit einem Plasmabrenner, der die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei dem erfindungsgemäßen Plasmabrenner ist durch mindestens eine Zuführung ein Plasmagas PG1 und/oder durch ein Gehäuse des Plasmabrenners und durch einen Hohlraum, der innerhalb des Gehäuses ausgebildet ist und mit einer Düsenöffnung kommuniziert bzw. damit verbunden ist, geführt. In der mindestens einen Zuführung kann mindestens ein Ventil zum Öffnen und Verschließen der jeweiligen Zuführung vorhanden sein. Diese Ventile zum Öffnen und Verschließen der Zuführung(en) können außerhalb des Plasmabrenners und/oder innerhalb des Gehäuses angeordnet sein.

An die Zuführung(en) angeschlossen, ist innerhalb des Gehäuses ein Hohlraum ausgebildet, der eine Öffnung aufweist. Die Öffnung sollte bevorzugt nach außen aus dem Gehäuse herausgeführt sein. Am Hohlraum ist innerhalb des Gehäuses ein die Öffnung öffnendes und verschließendes Ventil angeordnet. Über diese Öffnung kann bei geöffnetem Ventil Plasmagas aus der/den Zuführungen bis hin zur Düsenöffnung bei bestimmten Betriebszuständen, insbesondere beim Wechsel von Betriebszuständen, abgeführt und dort eine Entlüftung erreicht werden.

Da die Öffnung, ggf. über eine weitere Leitung nach außen außerhalb des Gehäuses geführt sein kann, kann sie im einfachsten Fall einfach mit der Umgebung kommunizieren, wenn das daran angeschlossene Ventil geöffnet ist. Sie kann aber auch an eine einen Unterdruck erzeugende Einheit und/oder ein Behältnis angeschlossen sein, in dem ein Druck unterhalb des Druckes in der/den Zuführung(en), bevorzugt im Bereich vor der Düsenöffnung und unterhalb des Umgebungsdruckes eingehalten ist.

Innerhalb der mindestens einen Zuführung und/oder dem Hohlraum kann mindestens ein Drucksensor angeordnet oder daran angeschlossen sein, mit dem bevorzugt der elektrische Strom und/oder die elektrische Spannung und/oder das Gas selbst, mit dem/der/denen der Plasmabrenner betrieben wird, Steuer- und/oder regelbar ist. In Abhängigkeit des so ermittelten Drucks kann allein oder zusätzlich dazu auch der Druck und/oder der Volumenstrom der/des zugeführten Plasmagase(s) bzw. des Sekundärgases gesteuert oder geregelt werden.

Es besteht auch die Möglichkeit, dass eine weitere Zuführung für ein Sekundärgas SG durch das Gehäuse geführt ist. Mittels einer Düsenschutzkappe und eine in der Düsenschutzkappe ausgebildete Sekundärgasführung neben einem Plasmastrahl, der durch die Düsenöffnung austritt, kann Sekundärgas SG nach außen geführt sein. An der Sekundärgaszuführung sollte ebenfalls ein Ventil zum Öffnen und Schließen angeschlossen sein.

Die Ventile für die Zuführung von Plasmagas und ggf. für Sekundärgas sollten bevorzugt regel- oder steuerbar sein.

Neben dem an dem Hohlraum oder der Öffnung vorhandenen Ventil ist auch mindestens ein Ventil zum Öffnen und Verschließen einer Zuführung für ein Plasmagas PG1 und/oder PG2 innerhalb des Gehäuses in Strömungsrichtung des jeweiligen Plasmagases PG1, PG2 in der jeweiligen Zuführung vor einem Anschluss an den Hohlraum angeordnet. Diese innerhalb des Gehäuses angeordneten Ventile sollten bevorzugt elektrisch, pneumatisch oder hydraulisch betätigbar und besonders bevorzugt als Axialventil ausgebildet sein. Elektrisch betätigbare Ventile können elektromagnetisch oder unter Nutzung des piezoelektrischen Effekts angesteuert werden.

Das mindestens eine im Gehäuse angeordnete Ventil, also ein in einer Zuführung oder an dem Hohlraum oder der Öffnung angeordnetes Ventil sollte einen maximalen Außendurchmesser oder der mittleren maximalen Flächendiagonale von 15 mm, bevorzugt maximal 11 mm und/oder eine maximale Länge von 50 mm, bevorzugt maximal 40 mm, besonders bevorzugt maximal 30mm aufweisen und/oder der maximale Außendurchmesser oder der maximalen mittleren Flächendiagonale des Gehäuses 52 mm betragen. Der maximale Außendurchmesser sollte maximal ¼, bevorzugt maximal 1/5 des Außendurchmessers des Gehäuses betragen. Die Ventile sollten eine maximale elektrische Leistungsaufnahme von 10 W, besser von 3 W, bevorzugt von 2W aufweisen.

Unter einer mittleren maximalen Flächendiagonale kann man bei nichtrotationssymmetrischen Querschnitten den Mittelwert aller Flächendiagonalen des jeweiligen Querschnitts verstehen. Die angegebenen Zahlenwerte sollten für Außendurchmesser 1:1 gelten und bei den Flächendiagonalen sollten die konkreten Werte maximal bis 15 % größer sein, als die angegebenen Außendurch messerwerte.

Bei einem elektrisch betreibbaren Ventil sollte Plasmagas (PG1, PG2) oder Sekundärgas die Wicklung einer Spule durchströmen, wodurch eine Kühlung erreichbar ist.

Der Hohlraum kann in Strömungsrichtung vor dem daran vorhandenen Ventil einen verkleinerten freien Querschnitt aufweisen. Ein verkleinerter freier Querschnitt kann aber auch in Strömungsrichtung nach dem Ventil an der Öffnung vorhanden sein. Durch einen so verkleinerten freien Querschnitt kann die Entlüftungszeit beeinflusst werden. Es kann dort auch eine den freien Querschnitt verkleinernde Blende angeordnet sein. Mit einem verkleinerten freien Querschnitt oder einer Blende kann insbesondere bei großen Düsenöffnungen die Zeit in der Plasmagas bei am Hohlraum geöffneten Ventil entweichen kann, vergrößert werden, um zu sichern, dass noch Plasmagas in einem Raum innerhalb der Düse vorhanden ist, solange noch eine elektrische Spannung an der Elektrode anliegt und/oder ein elektrischer Strom durch die Elektrode fließt. Dadurch können die Lebensdauer der Elektrode vergrößert und kritische Betriebszustände bei zu schnellem Entweichen von Plasmagas vermieden werden.

Der erfindungsgemäße Plasmabrenner kann auch als Schnellwechselbrenner mit einem von einem Plasmabrennerkopf trennbaren Plasmabrennerschaft ausgebildet sein. Durch einen einfachen Austausch von Komponenten kann so eine einfache und schnelle Anpassung an veränderte gewünschte Bearbeitungsbedingungen bzw. -anforderungen erreicht werden.

Wenn ein Entlüftungsvorgang vorgenommen werden soll, sollten zuerst Ventile in den Zuführungen für Plasmagas und ggf. Sekundärgas geschlossen werden, bevor das in den Hohlraum integrierte oder dort angeordnete Ventil geöffnet wird. Ggf. können diese Ventile gleichzeitig geschlossen und das eine Ventil dabei geöffnet werden.

Nachfolgend soll die Erfindung anhand von Beispielen noch besser erläutert werden. Die jeweiligen Ausführungsformen und technischen Merkmale der verschiedenen Beispiele können unabhängig vom jeweiligen einzeln beschriebenen Beispiel miteinander kombiniert werden.

Es zeigen:
- Figur 1: in schematischer Form eine Schnittdarstellung durch ein Beispiel eines erfindungsgemäßen Plasmabrenners mit einer Plasmagaszuführung;
- Figur 2: in schematischer Form eine Schnittdarstellung durch ein weiteres Beispiel eines erfindungsgemäßen Plasmabrenners mit einer Plasmagaszuführung;
- Figur 3: in schematischer Form eine Schnittdarstellung durch ein Beispiel eines erfindungsgemäßen Plasmabrenners mit zwei Plasmagaszuführungen;
- Figur 4: in schematischer Form eine Schnittdarstellung durch ein weiteres Beispiel eines erfindungsgemäßen Plasmabrenners mit zwei Plasmagaszuführungen;
- Figur 5: in schematischer Form eine Schnittdarstellung durch ein Beispiel eines erfindungsgemäßen Plasmabrenners mit einer Plasmagaszuführung und einer Sekundärgaszuführung;
- Figur 6: in schematischer Form eine Schnittdarstellung durch ein weiteres Beispiel eines erfindungsgemäßen Plasmabrenners mit einer Plasmagaszuführung und einem Drucksensor;
- Figur 7: eine Schnittdarstellung durch ein bei der Erfindung einsetzbares Axialventil;
- Figur 8: Möglichkeiten für die Anordnung von Ventilen innerhalb des Gehäuses eines Plasmabrenners und
- Figur 9: weitere Möglichkeiten für die Anordnung von Ventilen innerhalb des Gehäuses eines Plasmabrenners.

In den Figuren sind die Beispiele für die Plasmabrenner 1 vereinfacht dargestellt. Die für das Betreiben der Plasmabrenner 1 neben dem Gas weiter benötigten Medien und deren Zuführung zum Plasmabrenner 1, wie z. B. elektrischer Strom und Kühlwasser, sind nicht dargestellt.

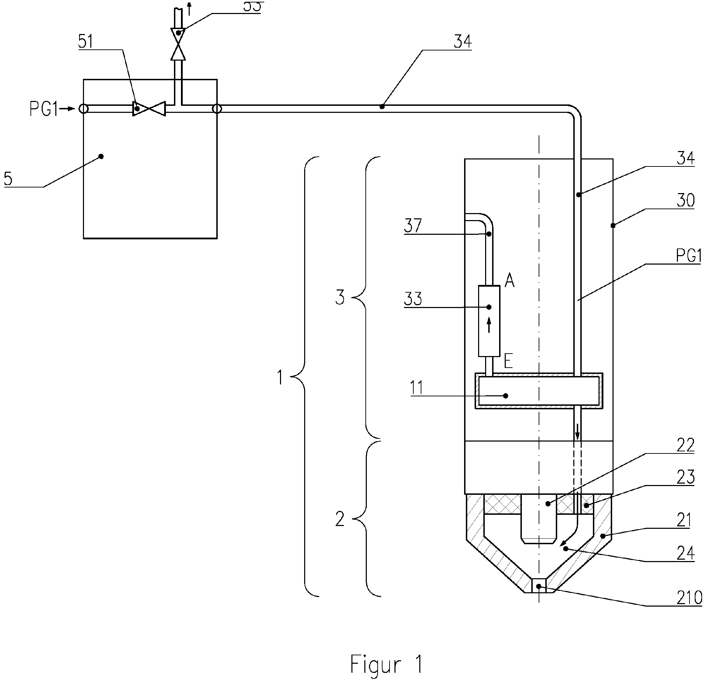

**Figur 1** zeigt einen Plasmabrenner 1 mit einem Plasmabrennerkopf 2 mit einer Düse 21, einer Elektrode 22 und einer Zuführung 34 für ein Plasmagas PG sowie einem Plasmabrennerschaft 3, der ein Gehäuse 30 aufweist. Bei der Erfindung, also auch bei allen anderen Beispielen, die unter die Erfindung fallen, kann der Plasmabrennerschaft 3 einteilig ausgebildet sein und lediglich mit einem entsprechend konfigurierten Gehäuse 30 gebildet sein, an dem alle erforderlichen Komponenten vorhanden und ausgebildet sein können.

Die Zuführung 34 kann außerhalb des Gehäuses 30 ein Gasschlauch sein, der für einen Zuleitung von Plasmagas PG1 mit einem Magnetventil 51 einer Koppeleinheit 5 verbunden ist. An den Gasschlauch schließt sich ein weiterer Teil der Zuführung 34 an, der innerhalb des Gehäuses 30 ausgebildet ist. Innerhalb des Gehäuses 30 ist die Zuführung 34 mit dem Hohlraum 11 verbunden. Durch den Hohlraum 11 kann Plasmagas bei geöffnetem Ventil 33 aus dem Raum 24, der zwischen Düse 22 und Elektrode 23 ausgebildet ist, über eine am Hohlraum 11 vorhandene und nach dem Ventil 33 angeordnete Öffnung in die Umgebung oder ein angeschlossenes Behältnis entweichen. Dies kann im Anschluss an das Ventil 33 über die Leitung 37 erfolgen. Die Elektrode 22 und die Düse 21 sind durch die Gasführung 23 in einem Abstand zueinander angeordnet, so dass sich ein Raum 24 innerhalb der Düse 21 bildet. Die Düse 21 hat eine Düsenbohrung 210, die je nach elektrischem Schneidstrom in ihrem Durchmesser von 0,5 mm für 20 A bis zu 7 mm für 800 A variieren kann. Die Gasführung 23 hat ebenfalls Öffnungen oder Bohrungen (nicht dargestellt), durch die das Plasmagas PG strömt. Diese können ebenfalls in unterschiedlicher Größe oder Durchmesser und sogar Anzahl gestaltet sein.

Im Plasmabrennerschaft 3 befindet sich ein elektromagnetisch betreibbares Ventil 33, dessen Eingang mit dem Hohlraum 11 verbunden ist, so dass bei geöffnetem Ventil 33 Plasmagas durch die Öffnung aus dem Hohlraum 11 nach außen außerhalb des Gehäuses 30 und dort ggf. in einen Behälter (nicht dargestellt), in dem ein Unterdruck vorhanden ist, gelangen kann. Der Hohlraum 11 ist mit seinem Innenvolumen minimiert. Es beträgt hier beispielsweise 5 cm³ bis 10 cm³. Das Ventil 33 ist als Axialventil in kleiner Bauform ausgeführt. So hat es beispielsweise einen Außendurchmesser D von 11 mm und eine Länge L von 40 mm. Es hat benötigt für den Betrieb eine geringe elektrische Leistung, hier bspw. ca. 2 W, um die Erwärmung im Gehäuse 30 zu reduzieren.

Beim Zünden des Lichtbogens und während des Schneidens strömt das Plasmagas PG1 durch das geöffnete Ventil 51 und die Zuführung 34 in das Gehäuse 30 und dort in den Hohlraum 11.

Soll das Schneiden beendet werden, wird zunächst das Ventil 51 in der Koppeleinheit 5 geschlossen. Da das Plasmagas PG1 möglichst in kleiner Zeit aus dem Raum 24 zwischen Düse 21 und Elektrode 22 ausströmen soll, um den Druck in diesem Raum 24 zu verringern, werden die Ventile 53 zur Entlüftung der Zuführung 34 und das Ventil 33 zur schnellen Entlüftung des Hohlraums 11 und des Raumes 24 geöffnet. Der Hohlraum 11 und der Raum 24 sind hier durch die Öffnungen bzw. Bohrungen der Zuführung 34 miteinander verbunden.

Dabei wird der Raum des Ventils 33, den seine Wicklung der Spule S umgibt, vom Plasmagas PG durchströmt, wodurch diese besser gekühlt wird. Durch die kleine Bauform, die geringe erforderliche elektrische Leistung und die Kühlung durch das strömende Plasmagas kann das Ventil 33 ohne weitere vorsorgliche Maßnahmen im Gehäuse 30 angeordnet werden.

Nach dem Entlüften werden die Ventile 33 und 53 wieder geschlossen und der Lichtbogen kann wieder gezündet werden. Durch diese Anordnung können kurze Entlüftungszeiten, die nahezu unabhängig von dem Innendurchmesser der Düsenbohrung 210 und den Bohrungen, die in der Zuführung 34 innerhalb des Gehäuses 30 ausgebildet sind, erreicht werden. Insbesondere bei Düsenbohrungen unter 1 mm würden diese ohne die beschriebene Anordnung mehrere 100 ms betragen. Im gezeigten Ausführungsbeispiel kann die Entlüftungszeit auf unter 200 ms reduziert werden.

Eine kurze Entlüftungszeit ist für ein möglichst schnelles Starten des nächsten Schneidvorgangs wichtig, um die Pausenzeiten zwischen zwei Schneidvorgängen zu reduzieren und die Produktivität zu erhöhen. Zusätzlich erhöht der schnelle Druckabbau die Lebensdauer der Elektrode 22, die ansonsten nach Verlöschen des Lichtbogens bei höherem Plasmagasdruck im Raum 24 und der damit verbundenen Strömung des Plasmagases PG1, PG2 durch Erosion stärker verschleißt.

Es kann ein weiterer Gasschlauch als Leitung 37 an den Hohlraum 11 und die Öffnung in Strömungsrichtung nach dem Ventil 33 angeschlossen sein, mit dem das bei einer Entlüftung zu entfernende Plasmagas definiert abgeführt werden kann, damit das Plasmagas zu einem bestimmten Ort, beispielsweise einen Behälter (nicht dargestellt) geführt werden kann. In Strömungsrichtung vor der Eingangsseite E des Ventils 33 ist hier beispielhaft eine Blende angebracht, mit der der bei einer Entlüftung abzuführende Plasmagasstrom und damit die Entlüftungszeit beeinflusst werden kann.

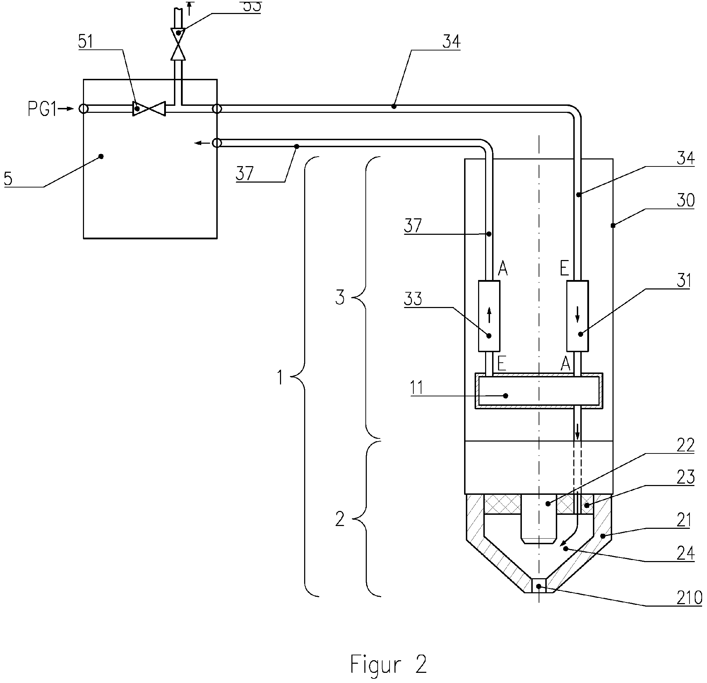

Die Dauer der Entlüftungszeit ist in diesem Ausführungsbeispiel immer noch von der Länge der gesamten Zuführung 34, also auch außerhalb des Gehäuses 30 und damit seinem Innenvolumen abhängig. In Figur 2 wird ein Beispiel gezeigt, wo dies nicht mehr der Fall ist.

**Figur 2** zeigt ebenfalls einen Plasmabrenner 1. Zusätzlich befindet sich im Gehäuse 30 in der Zuführung 34 vor dem Anschluss den Hohlraum 11 an die Zuführung 34 ein weiteres Ventil 31. Der Ausgang des Ventils ist mit dem Hohlraum 11 verbunden.

An den Hohlraum 11 ist innerhalb des Gehäuses 30 ein Ventil 33, dessen Eingang mit dem Hohlraum 11 verbunden ist, angeschlossen oder in der an den Hohlraum 11 angeschlossenen Öffnung angeordnet, so dass eine Entlüftung bei geöffnetem Ventil 33 erreicht werden kann. Das Innenvolumen des Hohlraums 11 ist minimiert. Dieses Innenvolumen wird durch die Ventile 31 und 34 sowie die Gasführung 23, die Bestandteil der Zuführung 34 sein kann, begrenzt und beträgt hier beispielsweise auf 5 cm³ bis 10 cm³.

Die Ventile 31 und 33 sind als Axialventil in kleiner Bauform ausgeführt. So haben sie beispielsweise einen Außendurchmesser D von 11 mm und eine Länge L von 40 mm. Es ist zum Betrieb eine geringe elektrische Leistung, hier bspw. ca. 2W, erforderlich, um die Wärmeentwicklung im Gehäuse 30 zu reduzieren.

Beim Zünden des Lichtbogens und während des Schneidens strömt das Plasmagas PG1 durch das geöffnete Ventil 51 und die Zuführung 34 zum Plasmabrenner 1, durch das Ventil 31 und dort auch in den Hohlraum 11.

Soll das Schneiden beendet werden, wird zunächst das Ventil 51 in der Koppeleinheit 5 geschlossen. Da das Plasmagas PG1 möglichst schnell aus dem Raum 24 zwischen Düse 21 und Elektrode 22 ausströmen soll, um den Druck in diesem Raum 24 in kleiner Zeit zu verringern, wird das Ventil 31 geschlossen und das Ventil 33 zur schnellen Entlüftung des Hohlraums 11 und des Raumes 24 geöffnet. Der Hohlraum 11 und der Raum 24 sind hier durch die Öffnungen bzw. Bohrungen der Gasführung 23 miteinander verbunden.

Dabei wird das Volumen im jeweiligen Ventil 31, 33, das seine jeweilige Wicklung der elektrischen Spule S umgibt, durchströmt, wodurch diese besser gekühlt wird. Durch die kleine Bauform, die geringe erforderliche elektrische Leistung und die Kühlung durch das strömende Plasmagas können die Ventile im Gehäuse 30 angeordnet werden.

Nach dem Entlüften wird das Ventil 33 wieder geschlossen und der Lichtbogen kann wieder gezündet werden. Durch diese Anordnung können noch kürzere Entlüftungszeiten, die nahezu unabhängig von dem Durchmesser der Düsenbohrung 210, den Bohrungen in der Gasführung 23 und der Länge der Zuführung 34 sind, erreicht werden. Im gezeigten Ausführungsbeispiel kann die Entlüftungszeit auf unter 100 ms reduziert werden.

In der Koppelstelle 5 ist noch das Entlüftungsventil 53 vorgesehen. Dies ist notwendig, wenn auch die gesamte Zuführung 34 bis hin zum Ventil 31 entlüftet werden soll. Dies ist z.B. dann sinnvoll, wenn zwischen den Schneidvorgängen unterschiedliche Drücke für das Plasmagas PG1 benötigt werden. Grundsätzlich kann die Anordnung aber auch ohne die Ventile 51 und 53 verwendet werden. Eine schnelle Entlüftung des Hohlraums 11 und des Raumes 24 kann auch so erreicht werden.

Durch die noch kürzere Entlüftungszeit ist ein noch schnelleres Starten des nächsten Schneidvorgangs möglich. Zusätzlich erhöht der in noch kürzerer Zeit erreichbare Innendruckabbau die Lebensdauer der Elektrode 22 nochmals.

Bei großen Düsen kann es aber ausreichend sein, nur das Ventil 31 zum Entlüften zu schließen und das Ventil 33 nicht zu öffnen und dann den Plasmabrenner in herkömmlicher Form zu betreiben.

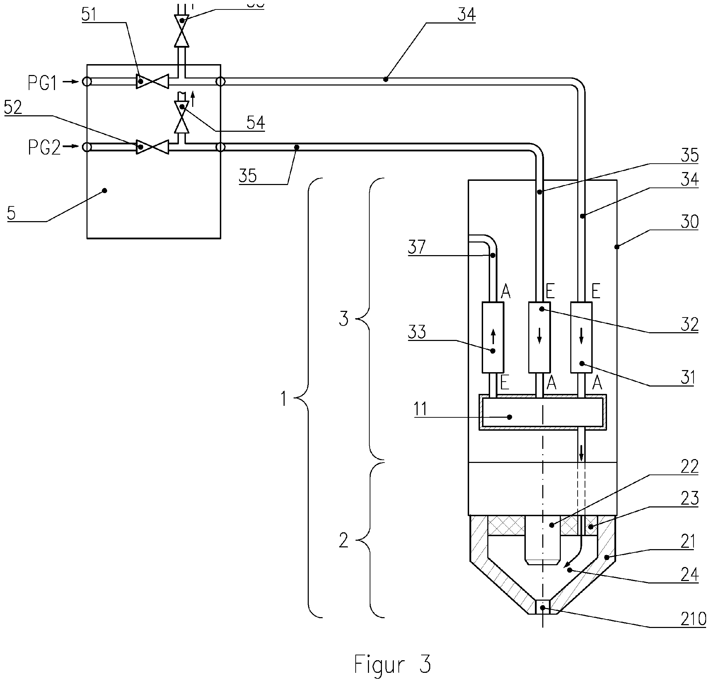

In einer Datenbank können die entsprechenden Parameter zum Schneiden hinterlegt und der Ablauf definiert sein, ob und wann das Ventil 33 geöffnet werden muss. Es kann ebenfalls vorgesehen sein, dass sich vor dem Eingang, z.B. zwischen dem Hohlraum 11 und dem Ventil 33 oder am oder nach dem Ausgang des Ventils 33 eine Blende 38, die einen kleineren Innendurchmesser, als der kleinste Innendurchmesser des Ventils 33 durch den das Plasmagas strömt aufweist, angeordnet ist. Dadurch kann die Entlüftungszeit ebenfalls beeinflusst werden. Es ist ebenso möglich, dass diese Blende 38 mit ihrem freien Querschnitt, durch den Plasmagas strömen kann, veränderbar ist. Zusätzlich kann sich auch eine weitere Leitung 37 am Ventil 33 und/oder der Blende 38 angeschlossen sein, damit das Plasmagas an einem bestimmten Ort, beispielsweise außerhalb des Gehäuses 30, hier beispielhaft an der Koppeleinheit 5, entweichen kann. Ebenso kann im Gehäuse 30 eine Öffnung vorhanden sein, durch die das Plasmagas entweichen kann. Dies gilt auch für die in den Figuren 1 und 3 gezeigten Beispiele.

Für bestimmte Anwendungen ist es sinnvoll, dass dem Plasmabrenner 1 zwei Plasmagase PG1 und PG2 zugeführt werden, z.B. wenn mit einem Plasmagas gezündet und mit dem anderen geschnitten werden soll. Beispielsweise wird mit Luft gezündet und mit Sauerstoff geschnitten, um den Elektrodenverschleiß zu verringern. Ebenso besteht die Möglichkeit, zwei unterschiedliche Plasmagase im Plasmabrenner 1 zu mischen oder ein zweites Plasmagas beim Schneiden zuzuschalten. Dies kann z.B. beim Schneiden mit Argon-Wasserstoff-Gemisch sinnvoll sein. Hier wird mit Argon gezündet und dann Wasserstoff zugemischt. Hier ist aber ebenso ein Umschalten zwischen zwei Plasmagasen möglich, beispielsweise wird unter Argon als Plasmagas PG1 gezündet und dann auf ein bereits gemischtes Plasmagas PG2 Argon-Wasserstoff-Gemisch oder Argon-Stickstoff oder Argon-Wasserstoff-StickstoffGemisch umgeschaltet. In Figur 3 ist dafür beispielhaft eine Anordnung gezeigt.

**Figur 3** zeigt ebenfalls einen Plasmabrenner 1. Im Gehäuse 30 sind in die Zuführungen 34 und 35 für unterschiedliche Plasmagase in Strömungsrichtung vor dem Anschluss den Hohlraum 11 jeweils Ventil 31 und weiteres Ventil 32 innerhalb des Gehäuses 30 geschaltet bzw. dort angeordnet. Der Eingang des Ventils 31 ist mit der Zuführung 34 und der Eingang des Ventils 32 ist mit der Zuführung 35 verbunden. Die Ausgänge beider Ventile 31 und 32 sind mit dem Hohlraum 11 verbunden.

Im Gehäuse 30 ist ein Ventil 33, dessen Eingang mit dem Hohlraum 11 verbunden, so dass es den Hohlraum 11 entlüften kann. Das Volumen im Inneren des Hohlraums 11 ist minimiert. Das zu entlüftende Volumen wird auch in gewisser Weise durch die Volumina der Ventile 31 und 34 sowie der Gasführung 23 begrenzt und beträgt hier beispielsweise 5 cm³ bis 10 cm³.

Die Ventile 31, 32 und 33 sind als Axialventil in kleiner Bauform ausgeführt. So hat sie beispielsweise einen Außendurchmesser D von 11 mm und eine Länge L von 40 mm. Sie benötigen eine geringe elektrische Leistung, hier bspw. ca. 2 W, so dass die Erwärmung im Gehäuse 30 reduziert ist.

Beim Zünden des Lichtbogens und während des Pilotbogens - der Lichtbogen brennt zwischen Elektrode 22 und Düse 21 - strömt das Plasmagas PG1 durch das geöffnete Ventil 51 und die Zuführung 34 zum Plasmabrenner 1, durch das Ventil 31 und dort in den Hohlraum 11.

Beim Schneiden, d.h. insbesondere dann wenn der Lichtbogen brennt, strömt das Plasmagas PG2 zwischen Elektrode 22 und der Düse 21 in Richtung Werkstück durch das geöffnete Ventil 52 und die Zuführung zum Plasmabrenner 1, durch das Ventil 32.

Hier gibt es beispielsweise die Fälle, wie bereits vorher beschrieben, bei denen zwischen zwei unterschiedlichen Plasmagasen PG1 und PG2 umgeschaltet wird oder aber ein zweites Plasmagas PG 2 zugeschaltet wird. Im ersten Fall wird dann das Ventil 31 geschlossen und das Ventil 32 geöffnet. Das Ventil 51 kann geschlossen werden, das Ventil 52 muss geöffnet sein und es strömt nur noch Plasmagas PG2. Dies kann auch überlappend geschehen, d.h. beide Ventile sind eine bestimmte Zeit, z. B. 300 ms, geöffnet, um einen ständigen Gasfluss zu sichern.

Im zweiten Fall, dass mit zwei Plasmagasen geschnitten wird, beispielsweise bei einem Gasgemisch, strömen die Plasmagase PG1 und PG2 in die Düse 21.

Soll das Schneiden im ersten Fall beendet werden, wird zunächst das Ventil 52 in der Koppeleinheit 5 geschlossen. Da das Plasmagas PG2 möglichst schnell aus dem Raum 24 zwischen Düse 21 und Elektrode 22 ausströmen soll, um den Druck in diesem Raum 24 in kurzer Zeit zu verringern, wird das Ventil 32 geschlossen und das Ventil 33 zur schnellen Entlüftung des Hohlraums 11 und des Raumes 24 geöffnet. Der Hohlraum 11 und der Raum 24 sind hier durch die Öffnungen bzw. Bohrungen der Gasführung 23 miteinander verbunden.

Soll das Schneiden im zweiten Fall beendet werden, werden zunächst die Ventile 51 und 52 in der Koppeleinheit 5 geschlossen. Da die Plasmagase PG1 und PG2 möglichst schnell aus dem Raum 24 zwischen Düse 21 und Elektrode 22 ausströmen sollen, um den Druck in diesem Raum in kurzer Zeit zu verringern, werden die Ventile 31 und 32 geschlossen und das Ventil 33 zur Entlüftung des Hohlraumes 11 und des Raumes 24, in kleiner Zeit geöffnet. Der Hohlraum 11 und der Raum 24 sind hier durch die Öffnungen bzw. Bohrungen der Gasführung 23 miteinander verbunden.

Dabei wird das Volumen des jeweiligen Ventils 31, 33, das seine jeweilige Wicklung der Spule S umgibt, durchströmt, wodurch diese besser gekühlt wird. Durch die kleine Bauform, die geringe erforderliche elektrische Leistung für den Betrieb und die Kühlung durch das strömende Plasmagas können die Ventile im Gehäuse 30 ohne weitere zusätzliche Maßnahmen angeordnet werden.

Nach dem Entlüften wird das Ventil 33 wieder geschlossen und der Lichtbogen kann wieder gezündet werden. Durch diese Anordnung können noch kürzere Entlüftungszeiten, die nahezu unabhängig von dem Durchmesser der Düsenbohrung 210, den Bohrungen in der Gasführung 23 und der Länge der Zuführungen 34 und 35 sind, erreicht werden. Bei diesem Beispiel kann die Entlüftungszeit auf unter 100 ms reduziert werden.

In der Koppelstelle 5 sind noch die Entlüftungsventile 53 und 54 vorgesehen. Dies ist notwendig, wenn auch die Zuführung 34 bis hin zum Ventil 31 und auch der Zuführung 35 für das zweite Plasmagas PG2 bis hin zum Ventil 32 entlüftet werden sollen. Dies ist z.B. dann sinnvoll, wenn zwischen den Schneidvorgängen unterschiedliche Drücke für die Plasmagase PG1 und PG2 erforderlich sind. Grundsätzlich kann die Anordnung aber auch ohne die Ventile 51 und 53 verwendet werden. Eine Entlüftung des Hohlraums 11 und des Raumes 24 in kleiner Zeit wird auch so erreicht.

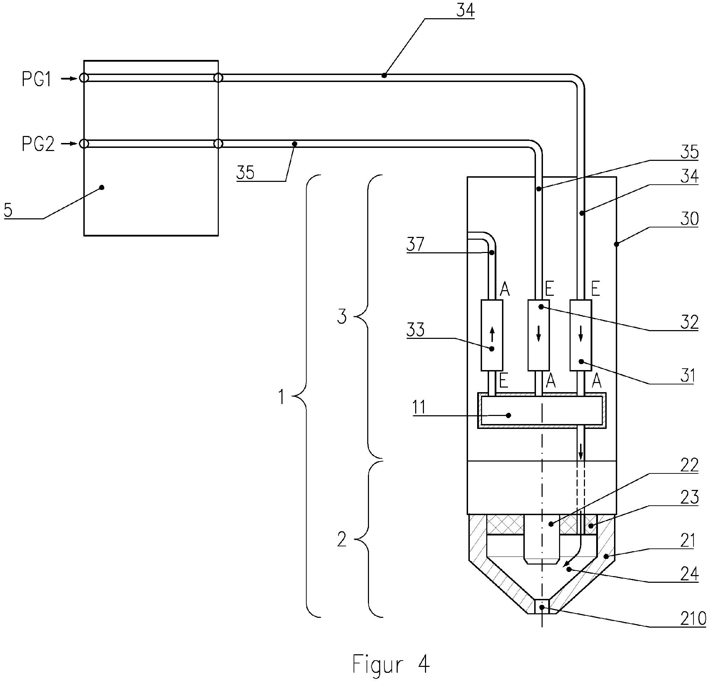

Es besteht auch die Möglichkeit, dass nur die im Plasmabrennerschaft angeordneten Ventile 31, 32 und/oder 33 vorhanden sind und die anderen Ventile nicht oder nur teilweise vorhanden sind. Beispielhaft ist dies in Figur 4 dargestellt.

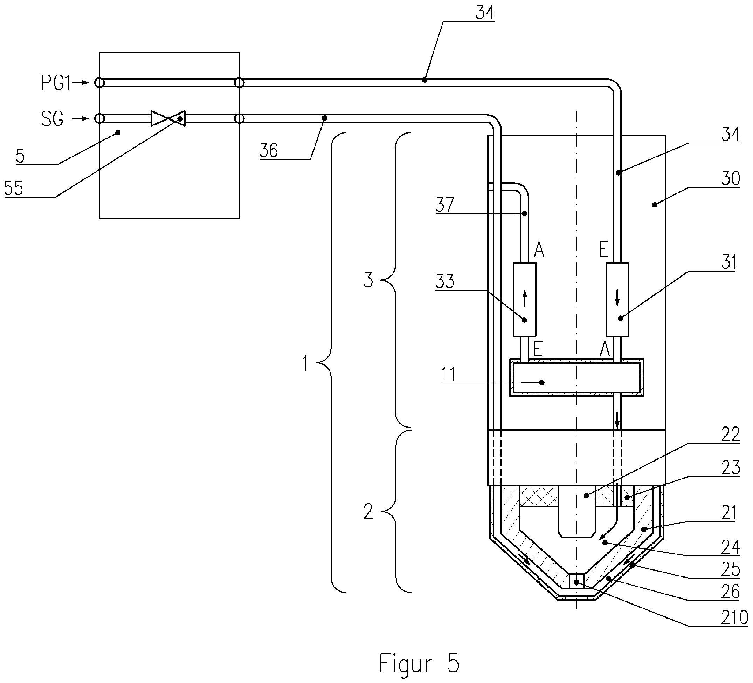

**Figur 5** zeigt einen Plasmabrenner 1, der zusätzlich zum bzw. zu den Plasmagasen PG1 und PG2 über eine Zuführung 36 für das Sekundärgas SG, wie bspw. in DE 10 2004 049 445 B4 gezeigt. Der Plasmabrenner 1 hat dann zusätzlich eine Düsenschutzkappe 25 und das Sekundärgas SG strömt durch den Raum 26 zwischen der Düse 21 oder einer Düsenkappe 25, die die Düse 21 in Richtung Lichtbogen fixiert und kann diesen umströmen oder auch einschnüren.

Das Sekundärgas SG wird dem Plasmabrenner 1 durch die Zuführung 36 zugeführt. Ein Ventil 55 schaltet und beeinflusst das Sekundärgas SG. Für das Sekundärgas SG kann auch, wie für die Plasmagase PG1 und PG2 ein Ventil (nicht dargestellt) im Gehäuse 30 vorhanden sein.

Der Plasmabrenner 1 kann auch als Schnellwechselbrenner, bei dem vom durch einfache Handgriffe oder automatisiert der Brennerkopf vom Brennerschaft getrennt werden kann, wie bspw. in DE 10 2006 038 134 B4 beschrieben, ausgeführt sein.

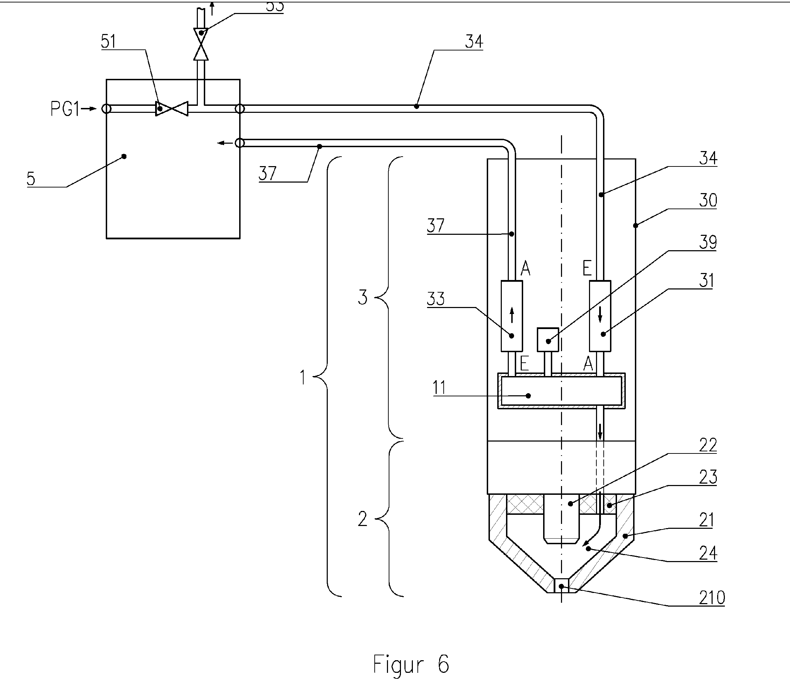

**Figur 6** zeigt eine Anordnung, wie in Figur 2 gezeigt. Zusätzlich ist dabei ein Drucksensor 39 im Gehäuse 30, der den Druck im Hohlraum 11 bestimmt. Das Messergebnis kann an eine Steuerung gegeben werden und so kann die Steuerung des elektrischen Schneidstromes oder das Schalten der Ventile in Abhängigkeit vom jeweils bestimmten Druck erfolgen. Der elektrische Strom kann in Abhängigkeit vom jeweils bestimmten Druck verändert werden. Beispielsweise kann der elektrische Strom mit Erhöhung des jeweils bestimmten Druckes vergrößert und bei Verringerung des jeweils bestimmten Drucks ebenfalls verringert werden. Diese Abhängigkeit kann proportional oder nichtproportional, anderen mathematischen Funktionen folgend, erfolgen. Ebenso kann der elektrische Strom abgeschaltet werden, wenn der jeweils bestimmte Druck im Hohlraum 11 einen vorgegebenen Wert unterschreitet.

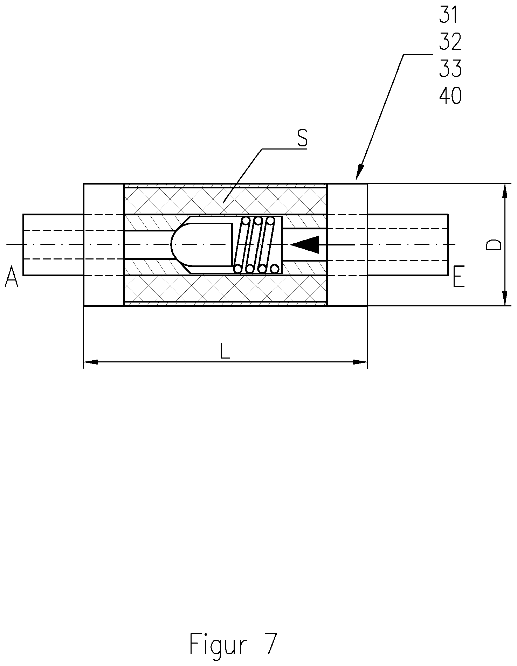

**Figur 7** zeigt den stark vereinfacht den Aufbau eines Axialmagnetventils, wie es bei der Erfindung eingesetzt werden kann, Im Inneren seines Körpers befindet sich die Spule S mit den Windungen, die vom Plasmagas vom Eingang E zum Ausgang A durchströmt werden kann. Im Inneren ist auch der Mechanismus zum Öffnen und Schließen angeordnet. Der Körper des Magnetventils hat eine Länge L und einen Außendurchmesser D. Das hier dargestellte Magnetventil hat eine Länge L von 25 mm und einen Durchmesser von 10mm.

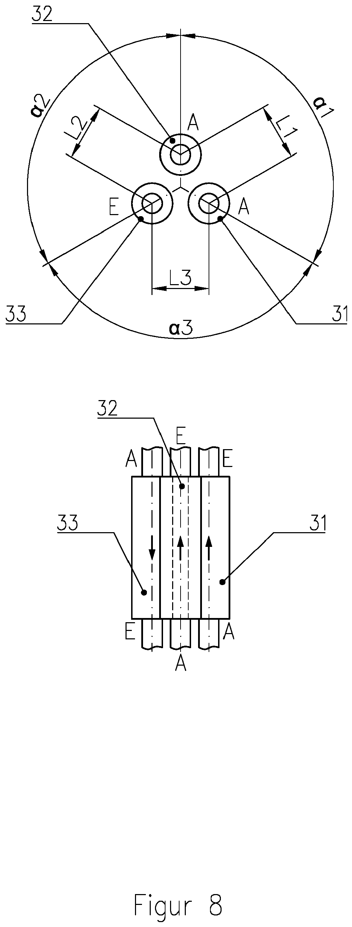

**Figur 8** zeigt eine mögliche raumsparende Anordnung der Ventile 31, 32 und 33. Sie sind im Gehäuse 30 so angeordnet, dass sie in einer Ebene senkrecht zur Mittellinie M jeweils in einem Winkel α1, von 120° angeordnet sind. Die Abweichung von diesem Winkel sollte ± 30° nicht überschreiten. Dadurch ist die Anordnung raumsparend und kann im Gehäuse 30 bzw. Plasmabrennerschaft 3 angeordnet werden. Die Abstände L1, L2 und L3 zwischen den Ventilen 31, 32, 33 sind jeweils ≤ 20mm. Von den Ventilen 31, 32 und 33 ist mindestens ein Ventil mit seinem Eingang E entgegengesetzt zu den anderen Ventilen, d.h. zu deren Ausgängen A angeordnet. Das entgegengesetzt angeordnete Ventil ist im gezeigten Beispiel das Ventil 33 im Hohlraum 11.

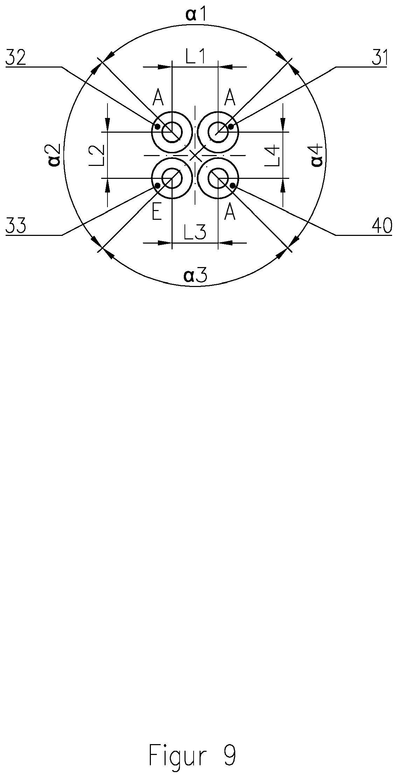

**Figur 9** zeigt eine Anordnung mit vier Ventilen 31, 32, 33 und 34. Sie sind im Inneren des Gehäuses 30 so angeordnet, dass sie in einer Ebene senkrecht zur Mittellinie M jeweils in Winkeln α1, α2, α3, α4 von 90° angeordnet sind. Die Abweichung von diesen Winkeln sollte ± 30° nicht überschreiten. Dadurch ist die Anordnung raumsparend und kann im Gehäuse 30 bzw. Plasmabrennerschaft 3 angeordnet werden. Die Abstände L1, L2, L3 und L4 zwischen den Ventilen sind ≤ 20 mm. Von diesen Ventilen 31 bis 34 ist mindestens ein Ventil mit seinem Eingang E entgegengesetzt zu den anderen Ventilen, d.h. zu deren Ausgängen A angeordnet.

### Bezugszeichenliste

- 1: Plasmabrenner
- 2: Plasmabrennerkopf
- 3: Plasmabrennerschaft
- 5: Koppeleinheit
- 11: Hohlraum
- 21: Düse
- 22: Elektrode
- 23: Gasführung
- 24: Raum (zwischen Elektrode - Düse)
- 25: Düsenschutzkappe
- 26: Raum (Düse - Düsenschutzkappe)
- 30: Hülse Plasmabrennerschaft
- 31: Ventil PG1
- 32: Ventil PG2
- 33: Ventil Entlüftung
- 34: Zuführung PG1
- 35: Zuführung PG2
- 36: Zuführung SG
- 37: Leitung
- 38: Blende
- 39: Drucksensor
- 40: Ventil für SG
- 51: Ventil
- 52: Ventil
- 53: Ventil
- 54: Ventil
- 55: Ventil
- 210: Düsenbohrung
- A: Ausgang
- D: Durchmesser
- E: Eingang
- L: Länge
- PG1: Plasmagas 1
- PG2: Plasmagas 2
- SG: Sekundärgas
- S: Spule
- L1-L4: Abstände der Ventile
- α1-α4: Winkel

## Patentansprüche

1. Plasmabrenner, bevorzugt ein Plasmaschneidbrenner, bei dem durch. mindestens eine Zuführung (34, 35) ein Plasmagas (PG1 und/oder PG2) durch ein Gehäuse (30) des Plasmabrenners (1) bis zu einer Düsenöffnung (210) geführt ist, und an der mindestens einen Zuführung (34, 35) mindestens ein Ventil (31, 32, 51, 52) zum Öffnen und Verschließen der jeweiligen Zuführung (34, 35) vorhanden ist; und ein an die Zuführung(en) (34, 35) angeschlossener Hohlraum (11) innerhalb des Gehäuses (30) vorhanden ist,
**dadurch gekennzeichnet, dass**
am Hohlraum (11), an dem an einer Öffnung, ein die Öffnung öffnendes und verschließendes weiteres Ventil (33), mit dem eine Abführung von Plasmagas (PG1 und/oder PG2) aus den Zuführung(en) (34, 35) bis zur Düsenöffnung (210) in geöffnetem Zustand dieses Ventils (33) erreichbar ist, angeordnet ist.

2. Plasmabrenner nach Anspruch 1, **dadurch gekennzeichnet, dass** die Öffnung am Hohlraum (11) nach außen außerhalb des Gehäuses (30) geführt ist und mit der Umgebung verbunden ist oder an eine einen Unterdruck erzeugende Einheit und/oder ein Behältnis angeschlossen ist, in dem ein Druck unterhalb des Druckes in der mindestens einen Zuführung (34, 35) im Bereich vor der Düsenöffnung (210).

3. Plasmabrenner nach Anspruch 1 oder 2, **dadurch gekennzeichnet, dass** im Behälter ein Druck unterhalb des Umgebungsdruckes eingehalten ist.

4. Plasmabrenner nach einem der vorhergehenden Ansprüche, **dadurch gekennzeichnet, dass** innerhalb der mindestens einen Zuführung (34, 35), einem Raum (24), der zwischen einer Düse (21) und einer Elektrode (22) des Plasmabrenners (1) ausgebildet ist, und/oder dem Hohlraum (11) mindestens ein Drucksensor (39) angeordnet oder daran angeschlossen ist, mit dem bevorzugt der elektrische Strom, die elektrische Spannung, des Drucks und/oder Volumenstroms für Plasmagas und/oder Sekundärgas (PG1, PG2, SG) mit dem/der/denen der Plasmabrenner (1) betrieben wird, Steuer- und/oder regelbar ist.

5. Plasmabrenner nach einem der vorhergehenden Ansprüche, **dadurch gekennzeichnet, dass** eine weitere Zuführung (36) für ein Sekundärgas (SG) durch das Gehäuse (30) und mittels einer Düsenschutzkappe (25) und eine in der Düsenschutzkappe (25) ausgebildete Sekundärgasführung (36) neben einem Plasmastrahl, der durch die Düsenöffnung (210) austritt, nach außen geführt ist, und an der Sekundärgaszuführung (36) ein Ventil (55) angeschlossen ist.

6. Plasmabrenner nach einem der vorhergehenden Ansprüche, **dadurch gekennzeichnet, dass** neben dem am Hohlraum (11) vorhandenen Ventil (33) auch mindestens ein Ventil (31 und/oder 32) zum Öffnen und Verschließen einer Zuführung (34 und/oder 35) für ein Plasmagas (PG1 und/oder PG2) innerhalb des Gehäuses (30) in Strömungsrichtung des jeweiligen Plasmagases (PG1, PG2) in der jeweiligen Zuführung (34, 35) vor dem Anschluss an den Hohlraum (11) angeordnet ist; wobei die innerhalb des Gehäuses (30) angeordneten Ventile (31, 32, 35) bevorzugt elektrisch, pneumatisch oder hydraulisch betätigbar und besonders bevorzugt als Axialventil ausgebildet sind.

7. Plasmabrenner nach einem der vorhergehenden Ansprüche, **dadurch gekennzeichnet, dass** das mindestens eine im Gehäuse (3) angeordnete Ventil (31, 32, 33) einen maximalen Außendurchmesser oder einer maximalen mittleren Flächendiagonale von 15 mm, bevorzugt maximal 11 mm und/oder eine maximale Länge von 50 mm, bevorzugt maximal 40 mm, besonders bevorzugt maximal 30 mm aufweist und/oder der maximale Außendurchmesser des Gehäuses (3) 52 mm beträgt und/oder dass der maximale Außendurchmesser maximal ¼, bevorzugt maximal 1/5 des Außendurchmessers oder einer maximalen mittleren Flächendiagonale des Gehäuses (30) aufweist und/oder eine maximale elektrische Leistungsaufnahme von 10 W, bevorzugt von 3 W, besonders bevorzugt von 2 W aufweist.

8. Plasmabrenner nach einem der vorhergehenden Ansprüche, **dadurch gekennzeichnet, dass** bei einem elektrisch betreibbaren Ventil (31, 32, 33) Plasmagas (PG1, PG2) und/oder Sekundärgas (SG) die Wicklung einer Spule (S) durchströmt.

9. Plasmabrenner nach einem der vorhergehenden Ansprüche, **dadurch gekennzeichnet, dass** der Hohlraum (11) in Strömungsrichtung vor und/oder die Öffnung nach dem Ventil (33) einen verkleinerten freien Querschnitt aufweist oder dort eine den freien Querschnitt verkleinernde Blende im Hohlraum (11) oder der Öffnung angeordnet ist.

10. Plasmabrenner nach einem der vorhergehenden Ansprüche, **dadurch gekennzeichnet, dass** er als Schnellwechselbrenner mit einem von einem Plasmabrennerkopf (2) trennbaren Plasmabrennerschaft (3) ausgebildet ist.

## Claims

1. Plasma torch, preferably a plasma cutting torch, in which a plasma gas (PG1 and/or PG2) is guided by way of at least one infeed (34, 35) through a housing (30) of the plasma torch (1) up to a nozzle opening (210), and at least one valve (31, 32, 51, 52) for opening and closing the respective infeed (34, 35) is present on the at least one infeed (34, 35), and a cavity (11) that is connected to the infeed(s) (34, 35) is present within the housing (30), **characterized in that** a further valve (33) is disposed on an opening on the cavity (11), said further valve (33) opening and closing the opening, by way of which valve (33) a discharge of plasma gas (PG1 and/or PG2) from the infeed(s) (34, 35) up to the nozzle opening (210) is achievable in the opened state of said valve (33).

2. Plasma torch according to Claim 1, **characterized in that** the opening on the cavity (11) is guided outwards to outside the housing (30) and is connected to the environment or connected to a vacuum-generating unit and/or a vessel in which a pressure below the pressure in the at least one infeed (34, 35) in the region ahead of the nozzle opening (210).

3. Plasma torch according to Claim 1 or 2, **characterized in that** a pressure below the ambient pressure is maintained in the container.

4. Plasma torch according to one of the preceding claims, **characterized in that** at least one pressure sensor (39) is disposed or connected within the at least one infeed (34, 35), a space (24) which is configured between a nozzle (21) and an electrode (22) of the plasma torch (1), and/or the cavity (11); the electric current, the electric voltage, the pressure and/or the volumetric flow of the plasma gas and/or secondary gas (PG1, PG2, SG) by way of which the plasma torch (1) is operated is preferably capable of being controlled and/or regulated by way of said pressure sensor (39).

5. Plasma torch according to one of the preceding claims, **characterized in that** a further infeed (36) for a secondary gas (SG) is guided through the housing (30) and, by means of a nozzle protection cap (25) and a secondary gas conduit (36) that is configured in the nozzle protection cap (25), outwards beside a plasma jet which exits through the nozzle opening (210), and on the secondary gas infeed (36) is connected to a valve (55) .

6. Plasma torch according to one of the preceding claims, **characterized in that**, besides the valve (33) that is present on the cavity (11), at least one valve (31 and/or 32) for opening and closing an infeed (34 and/or 35) for a plasma gas (PG1 and/or PG2) is also disposed within the housing (30), so as to be ahead of the connector to the cavity (11) in the flow direction of the respective plasma gas (PG1, PG2) in the respective infeed (34, 35); wherein the valves (31, 32, 35) that are disposed within the housing (30) are preferably configured so as to be electrically, pneumatically or hydraulically activatable, and are particularly preferably configured as axial valves.

7. Plasma torch according to one of the preceding claims, **characterized in that** the at least one valve (31, 32, 33) that is disposed in the housing (3) has a maximum external diameter, or a maximum mean face diagonal, of 15 mm, preferably at most 11 mm, and/or a maximum length of 50 mm, preferably at most 40 mm, particularly preferably at most 30 mm, and/or the maximum external diameter of the housing (3) is 52 mm, and/or **in that** the maximum external diameter has at most 1/4, preferably at most 1/5, of the external diameter or of a maximum mean face diagonal of the housing (30), and/or has a maximum electrical power input of 10 W, preferably of 3 W, particularly preferably of 2 W.

8. Plasma torch according to one of the preceding claims, **characterized in that** in the case of an electrically operable valve (31, 32, 33), plasma gas (PG1, PG2) and/or secondary gas (SG) flows through the winding of a coil (S).

9. Plasma torch according to one of the preceding claims, **characterized in that** the cavity (11) in the flow direction ahead of the valve (33), and/or the opening in the flow direction behind the valve (33), have/has a reduced available cross section, or an aperture that reduces the available cross section is disposed there in the cavity (11) or the opening.

10. Plasma torch according to one of the preceding claims, **characterized in that** said plasma torch is configured as a quick-change torch having a plasma torch shaft (3) that is separable from a plasma torch head (2).

## Revendications

1. Torche à plasma, de préférence une torche de découpe au plasma, dans laquelle, grâce à au moins une alimentation (34, 35), un gaz plasmagène (PG1 et/ou PG2) est guidé à travers un boîtier (30) de la torche à plasma (1) jusqu'à une ouverture de buse (210) et, sur l'au moins une alimentation (34, 35), est prévue au moins une soupape (31, 32, 51, 52) pour l'ouverture et la fermeture de l'alimentation (34, 35) correspondante ; et
une cavité (11), raccordée à l'alimentation ou aux alimentations (34, 35), est prévue à l'intérieur du boîtier (30),
**caractérisée en ce que**
sur la cavité (11) est disposée, au niveau d'une ouverture, une soupape supplémentaire (33) ouvrant et fermant l'ouverture, avec laquelle une évacuation du gaz plasmagène (PG1 et/ou PG2) hors de l'alimentation ou des alimentations (34, 35) peut être obtenue jusqu'à l'ouverture de buse (210) dans l'état ouvert de cette soupape (33).

2. Torche à plasma selon la revendication 1, **caractérisée en ce que** l'ouverture au niveau de la cavité (11) est guidée vers l'extérieur hors du boîtier (30) et est reliée avec l'environnement ou est raccordée à une unité et/ou un récipient générant une dépression, dans lequel règne une pression inférieure à la pression dans l'au moins une alimentation (34, 35) dans la zone devant l'ouverture de buse (210).

3. Torche à plasma selon la revendication 1 ou 2, **caractérisée en ce que**, dans le récipient, une pression inférieure à la pression ambiante est maintenue.

4. Torche à plasma selon l'une des revendications précédentes, **caractérisée en ce que**, à l'intérieur de l'au moins une alimentation (34, 35), dans un espace (24), qui est formé entre une buse (21) et une électrode (22) de la torche à plasma (1) et/ou dans la cavité (11), un capteur de pression (39) est disposé ou y est raccordé, avec lequel, de préférence, le courant électrique, la tension électrique, la pression et/ou le débit volumique pour le gaz plasmagène et/ou un gaz secondaire (PG1, PG2, SG) utilisés pour le fonctionnement de la torche à plasma, peuvent être contrôlés et/ou réglés.

5. Torche à plasma selon l'une des revendications précédentes, **caractérisée en ce qu'**une alimentation supplémentaire (36) pour un gaz secondaire (SG) est guidée vers l'extérieur à travers le boîtier (30) au moyen d'un capuchon protecteur de buse (25) et d'un guidage de gaz secondaire (36) formé dans le capuchon protecteur de buse (25), à côté d'un jet de plasma, qui sort de l'ouverture de buse (210), et **en ce qu'**une soupape (55) est raccordée au guidage de gaz secondaire (36).

6. Torche à plasma selon l'une des revendications précédentes, **caractérisée en ce que**, à côté de la soupape (33) prévue au niveau de la cavité (11), est disposée également au moins une soupape (31 et/ou 32) pour l'ouverture et la fermeture d'une alimentation (34 et/ou 35) pour un gaz plasmagène (PG1 et/ou PG2) à l'intérieur du boîtier (30) dans la direction d'écoulement du gaz plasmagène (PG1, PG2) correspondant dans l'alimentation (34, 35) correspondante avant le raccordement à la cavité (11) ; les soupapes (31, 32, 35) disposées à l'intérieur du boîtier (30) pouvant être actionnées de préférence électriquement, pneumatiquement ou hydrauliquement et de préférence étant conçues comme des soupapes axiales.

7. Torche à plasma selon l'une des revendications précédentes, **caractérisée en ce que** l'au moins une soupape (31, 32, 33) disposée dans le boîtier (3) présente un diamètre extérieur maximal ou une diagonale de surface moyenne maximale de 15 mm, de préférence de 11 mm maximum et/ou une longueur maximale de 50 mm, de préférence de 40 mm maximum, de préférence particulière de 30 mm maximum et/ou le diamètre extérieur maximal du boîtier (3) mesurant 52 mm et/ou le diamètre extérieur maximal représentant au maximum 1/4, de préférence au maximum 1/5 du diamètre extérieur ou d'une diagonale de surface moyenne maximale du boîtier (30) et/ou présentant une consommation de puissance électrique maximale de 10 W, de préférence de 3 W, de préférence particulière de 2 W.

8. Torche à plasma selon l'une des revendications précédentes, **caractérisée en ce que**, dans le cas d'une soupape actionnée électriquement (31, 32, 33) le gaz plasmagène (PG1, PG2) et/ou le gaz secondaire (SG) traversent l'enroulement d'une bobine (S).

9. Torche à plasma selon l'une des revendications précédentes, **caractérisée en ce que** la cavité (11) présente, dans la direction d'écoulement, avant la soupape (33), et/ou que l'ouverture présente, après la soupape (33), une section transversale libre réduite, ou qu'un diaphragme réduisant la section transversale libre est disposé dans la cavité (11) ou l'ouverture.

10. Torche à plasma selon l'une des revendications précédentes, **caractérisée en ce qu'**elle soit conçue comme une torche à changement rapide avec une tige de torche à plasma (3) pouvant être séparée d'une tête de torche à plasma (2).
